Europäisches Patentamt

European Patent Office

Office européen des brevets

(19)

(11) **EP 1 227 442 B1**

(12) **FASCICULE DE BREVET EUROPEEN**

| | |
|---|---|
| (45) Date de publication et mention de la délivrance du brevet: **27.10.2004 Bulletin 2004/44** | (51) Int Cl.⁷: **G06T 15/20** |

(21) Numéro de dépôt: **02075253.1**

(22) Date de dépôt: **22.01.2002**

(54) **Procédé de traitement d'images en 2D appliquées sur des objets en 3D**

Auf 3D Objekten angewendetes 2D Bildverarbeitungsverfahren

2D image processing applied to 3D objects

| | |
|---|---|
| (84) Etats contractants désignés: **AT BE CH CY DE DK ES FI FR GB GR IE IT LI LU MC NL PT SE TR** | (72) Inventeur: **Duquesnois, Laurent, Société Civile S.P.I.D. 75008 Paris (FR)** |
| (30) Priorité: **30.01.2001 FR 0101237** | (74) Mandataire: **Chaffraix, Jean Société Civile SPID, 156, Boulevard Haussmann 75008 Paris (FR)** |
| (43) Date de publication de la demande: **31.07.2002 Bulletin 2002/31** | |
| (73) Titulaire: **Koninklijke Philips Electronics N.V. 5621 BA Eindhoven (NL)** | (56) Documents cités: **US-A- 5 333 245** |

**Description**

DOMAINE TECHNIQUE

L'invention concerne un procédé de traitement d'images dans des images comprenant des objets en trois dimensions, le procédé comportant une étape d'application d'une image en deux dimensions sur une face d'un objet en trois dimensions. L'invention trouve son application, par exemple, dans l'industrie de l'informatique, notamment dans des jeux vidéos.

ETAT DE LA TECHNIQUE ANTERIEURE

La projection d'objets en trois dimensions (le terme 'trois dimensions' étant noté '3D' par la suite) sur un écran est couramment utilisée, notamment dans la conception des jeux vidéos. De nombreuses interfaces, appelées HAL (en anglais Hardware Abstraction Layer), permettent de simplifier cette conception en réalisant des interfaces entre le langage logiciel employé pour la conception et une carte graphique permettant la projection des images en 3D. Certaines de ces interfaces permettent d'appliquer une image en deux dimensions (le terme 'deux dimensions' étant noté '2D' par la suite) sur une face d'un objet en 3D. On parle alors de 'mapping' cf US-A- 5333245. Par exemple, il est possible d'appliquer une tapisserie sur les murs d'une pièce représentée en 3D, ou encore une texture sur les faces d'un cube en 3D. Par ailleurs, le développement de la vidéo numérique, par exemple au format MPEG, a permis l'interaction entre le monde de la vidéo et le monde de la 3D. Ainsi, certains langages de conception d'images en 3D permettent désormais d'utiliser des vidéos dans ces images. C'est le cas par exemple du langage VRML (en anglais Virtual Reality Modeling Language), décrit dans la norme ISO/IEC 14772-1 :1997. Ce langage est un langage de description de scène, qui offre notamment la possibilité d'appliquer une vidéo au format MPEG sur une face d'un objet en 3D. Ce langage permet également d'appliquer une image fixe sur une face d'un objet en 3D. Le langage VRML décrit une scène par un arbre constitué de différents noeuds. La description d'une scène se fait au travers d'un fichier texte. L'application d'une image en 2D sur une face d'un objet en 3D s'effectue grâce au noeud 'Imagetexture' et l'application d'une vidéo grâce au noeud 'Movietexture'.

EXPOSE DE L'INVENTION

Un but de l'invention est de proposer un procédé permettant l'interaction entre un utilisateur et une image fixe ou une vidéo en 2D appliquée sur une face d'un objet en 3D.
Selon l'invention, un procédé tel que défini dans le paragraphe d'ouverture est caractérisé en ce qu'il comprend une étape d'interaction entre un utilisateur et l'image en deux dimensions appliquée sur l'objet en trois dimensions, ladite étape d'interaction étant destinée à permettre à l'utilisateur de déplacer tout ou partie de l'image en deux dimensions sur la face de l'objet en trois dimensions.
L'invention prend les aspects suivants en considération. Lorsqu'un utilisateur applique une image fixe ou une vidéo ( par la suite, le terme 'image' désignera une image fixe ou une vidéo) en 2D sur une face d'un objet en 3D, l'image prend la taille de cette face et il n'est pas possible d'interagir avec le contenu résultant de cette opération. Par exemple, il pourrait être souhaitable de déplacer l'image sur la face de l'objet en 3D, ou alors de déplacer une partie de cette image, si celle-ci est constituée de plusieurs parties.
Selon l'art antérieur, il est possible pour un utilisateur de déplacer une image dans un plan en 2D. Par exemple, la norme MPEG-4 autorise un utilisateur à interagir avec un objet vidéo, lui permettant de déplacer tout ou partie de cet objet dans la fenêtre de diffusion de l'objet vidéo.
Le principe suivant permet à un utilisateur de déplacer une image en 2D appliquée sur un objet en 3D en tenant compte notamment de la perspective. Chaque objet en 3D est inclus dans une boîte en 3D, qui est le plus petit parallélépipède rectangle incluant l'objet en question. Lorsque l'utilisateur désire sélectionner une face d'un objet en 3D, il positionne un curseur, dont le déplacement est commandé par une souris, sur ladite face et clique grâce à la souris. Un rayon imaginaire entre un point de vue et l'endroit où l'utilisateur a cliqué, permet de déterminer quelle boîte (donc quel objet) et quelle face de cette boîte l'utilisateur désirait sélectionner. Grâce à des projections des faces de l'objet en 3D sur la face de la boîte sélectionnée, il est possible de connaître la face de l'objet que l'utilisateur désirait sélectionner, ainsi que le point de cette face que l'utilisateur désirait sélectionner. Ce point peut correspondre à l'endroit de la face où l'image en 2D ou une partie de cette image est appliquée. Par exemple, dans le cas d'une vidéo au format MPEG-4, ce point peut correspondre à la localisation d'une partie de la vidéo dans la fenêtre de diffusion. Le problème est alors de connaître les coordonnées de ce point dans la fenêtre de diffusion, c'est à dire en 2D. Connaissant les coordonnées en 3D de la face de l'objet en 3D ainsi que les coordonnées en 3D du point de la face de l'objet en 3D sélectionnés par l'utilisateur, une conversion de coordonnées basée sur un calcul de barycentre permet de connaître les coordonnées en 2D de ce point dans un plan en 2D correspondant par exemple à la fenêtre de diffusion. Une fois que les coordonnées en 2D de ce point sont connus, le problème se ramène à un problème en 2D, que l'on sait résoudre dans l'art antérieur. Lorsque l'utilisateur déplace ce point, par exemple grâce au curseur commandé par sa souris, le point est dans un premier temps déplacé dans un plan en 2D, par exemple la fenêtre de diffusion, vers un autre point de ce plan en 2D. Les coordonnées en 2D de cet autre point étant connu, une conversion de coordonnées du même type que celle décrite ci-dessus permet de connaître les coordonnées en 3D de cet autre point. Grâce à la souris, l'utilisateur peut donc déplacer le point qu'il a sélectionné à sa guise sur la face de l'objet en 3D, déplaçant ainsi l'image ou la partie de l'image qu'il a sélectionnée.

Un avantage de ce procédé est qu'il permet une utilisation plus souple du 'mapping' d'image en 2D sur les faces d'un objet en 3D. En effet, l'utilisateur pourra placer l'image à l'endroit qu'il désire sur la face d'un objet en 3D et déplacer cette image à sa guise sur cette face, en utilisant simplement, par exemple, une souris reliée à son ordinateur. Pour le concepteur, un intérêt de ce procédé est, par exemple, de pouvoir créer un puzzle sur une face d'un objet en 3D, cet objet étant immobile ou en mouvement. En effet, en 2D, un puzzle est un assemblage de plusieurs parties d'une image. Dans un premier temps, l'image est découpée en plusieurs parties qui sont réparties de manière aléatoire dans un plan de jeu, qui peut être l'écran d'ordinateur ou une fenêtre de cet écran. L'utilisateur est ensuite chargé de déplacer chacune des pièces afin de reconstituer l'image initiale, le déplacement d'une pièce pouvant s'effectuer en positionnant un curseur sur la pièce et en commandant le déplacement de ce curseur à l'aide d'une souris reliée à l'ordinateur. Grâce au procédé selon l'invention, le plan de jeu pourra être une face d'un objet en 3D. Il faut noter qu'un tel puzzle peut comprendre plusieurs parties d'une vidéo au format MPEG 4. Bien entendu, les applications de ce procédé sont multiples et ne se limitent pas à la conception d'un puzzle sur une face d'un objet en 3D.

BREVE DESCRIPTION DES FIGURES

L'invention et des caractéristiques additionnelles qui peuvent être utilisées avec avantage pour mettre en oeuvre l'invention, seront décrites ci-dessous plus en détail au regard des figures suivantes.

La figure 1 est un schéma illustrant les caractéristiques de l'invention ;
La figure 2 illustre un exemple d'architecture permettant la conception d'environnements en 3D ;
Les figures 3a, 3b et 3c illustrent des exemples de boîtes parallélépipédiques (en anglais 'bounding box') contenant des objets en 3D ;
La figure 4 illustre une technique permettant la sélection d'une face d'une boîte parallélépipédique contenant un objet en 3D ;
La figure 5 illustre une technique permettant la sélection d'une face d'un objet en 3D ;
La figure 6 illustre un exemple de conversion de coordonnées 3D en coordonnées 2D ;
La figure 7 illustre des exemples de transformations de la forme d'une image avant l'application sur une face d'un objet en 3D.

MODE DE REALISATION DE L'INVENTION

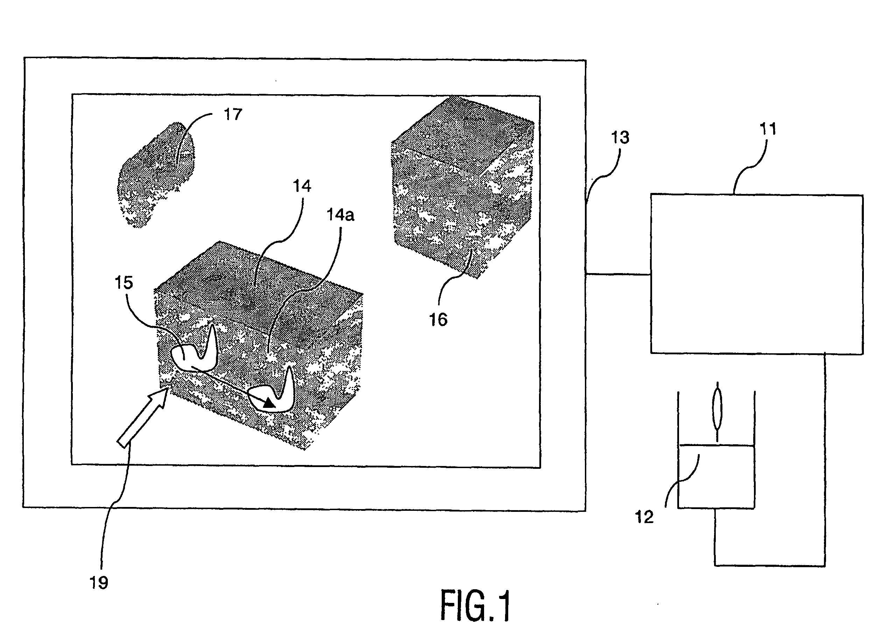

La figure 1 illustre les caractéristiques de l'invention. Un système mettant en oeuvre le procédé suivant l'invention comprend une unité centrale d'ordinateur 11, une souris 12 commandant un curseur 19, un écran d'ordinateur 13 diffusant des objets en 3D comme un parallélépipède 14, sur les faces desquelles peuvent être appliquées des images 2D comme une image 15.

L'exemple illustré ici s'applique à des objets en 3D, comme un cylindre 17, un cube 16 ou le parallélépipède 14. Dans cette exemple, l'image 15 est appliquée sur une des faces 14a du parallélépipède 14. Dans le cas du puzzle, l'image 15 peut être une pièce du puzzle. Lorsque l'utilisateur désire déplacer cette image 15, il utilise la souris 12 reliée à l'unité centrale d'ordinateur 11, afin de déplacer le curseur 19, pour placer ce curseur à l'endroit de l'écran d'ordinateur 13 où se trouve la première image 15. Il clique alors sur un des boutons de la souris 12, ce qui a pour effet de sélectionner l'image 15. L'utilisateur peut alors déplacer cette image 15 grâce à la souris 12, afin de la placer à un autre endroit de la face 14a du parallélépipède 14. Dans le cas du puzzle, la face 14a du parallélépipède 14 peut représenter l'aire de jeu, le but du jeu étant de déplacer chacune des pièces appliquées sur la face 14a afin de reconstituer l'image initiale du puzzle. Il faut noter que la souris 12 peut être remplacée par de nombreux appareils de commande, par exemple une manette, un pistolet ou un doigt de l'utilisateur ; pour ce dernier exemple, l'écran d'ordinateur 13 est un écran tactile.

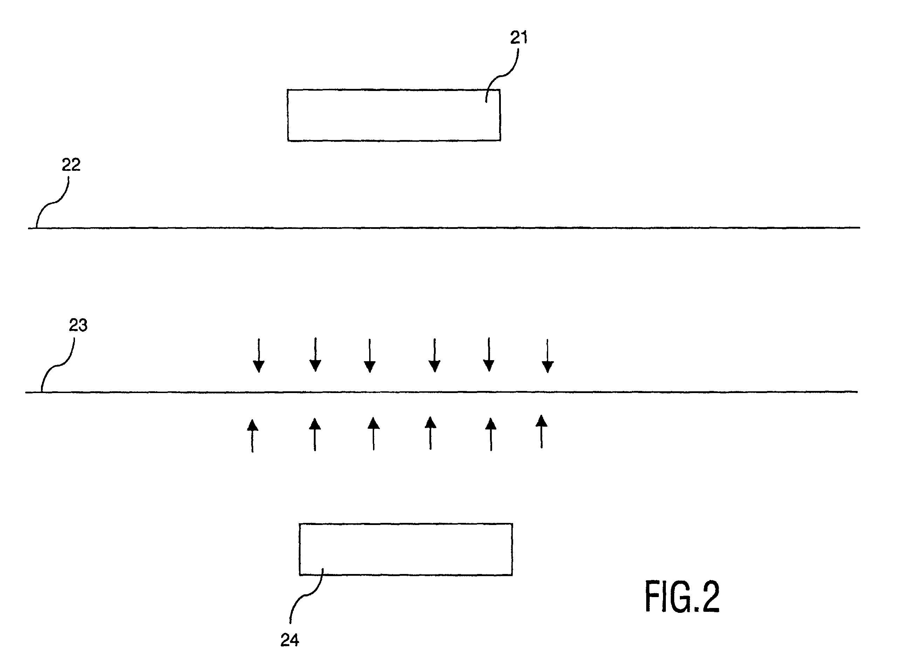

La figure 2 illustre une architecture permettant la conception d'environnements en 3D. L'exemple illustré ici s'applique à une conception en langage VRML. L'architecture comprend un logiciel 21, une interface VRML 22, une interface HAL 23 et une carte graphique 24.

L'interface HAL 23, par exemple OpenGL, permet de réaliser la liaison entre le langage utilisé pour créer le logiciel 21 et la carte graphique 24. L'interface HAL 23 est une librairie graphique 3D, c'est-à-dire qu'à partir des ordres de tracés de primitives graphiques en 3D, d'une position de caméra, des lumières, des images à appliquer sur les surfaces d'objets en 3D et d'autres informations de ce type, elle se charge d'effectuer, par exemple, les changements de repère, la projection en perspective à l'écran ou l'élimination des parties cachées des objets en 3D. Elle s'adresse ensuite à la carte graphique 24 pour lui donner les éléments nécessaires à l'affichage des objets en 3D. Par conséquent, l'interface HAL 23 permet de concevoir des environnements 3D sans tenir compte de la carte graphique 24, le seul impératif étant la compatibilité entre le langage utilisé pour la conception, c'est-à-dire VRML ici, et l'interface HAL 23. L'interface VRML 22 permet d'assurer cette compatibilité, en transformant le langage VRML, qui est un langage textuel, en un langage compréhensible par l'interface HAL 23, par exemple le langage C++. De la même manière, la carte graphique 24 peut être conçue sans tenir compte du langage des logiciels décrivant les environnements 3D qu'elle devra afficher, le seul impératif étant la compatibilité entre le langage utilisé pour la carte graphique 24 et l'interface HAL 23.

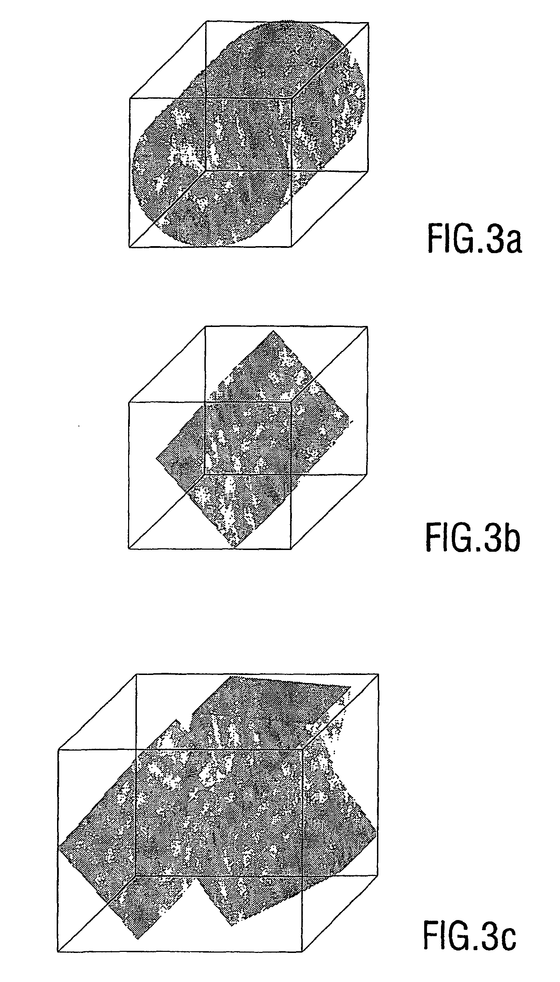

Les figures 3a, 3b et 3c illustrent des exemples de boîtes parallélépipédiques contenant des objets en 3D.

La figure 3a montre une boîte parallélépipédique contenant un cylindre. Cette boîte a pour hauteur et largeur le diamètre du cylindre et pour longueur la longueur du cylindre. La figure 3b montre une boîte parallélépipédique contenant un parallélépipède non rectangle. Cette boîte a pour hauteur la diagonale d'une des faces du parallélépipède non rectangle, pour largeur l'autre diagonale de cette face et pour longueur la longueur du parallélépipède non rectangle. La figure 3c montre une boîte parallélépipédique contenant un objet complexe. Les dimensions de cette boîte sont calculées en fonction des dimensions de l'objet complexe de façon à limiter au maximum sa taille. Il faut noter que pour un cube, la boîte parallélépipédique contenant ce cube est confondue avec ce cube. Il en est de même pour un parallélépipède rectangle.

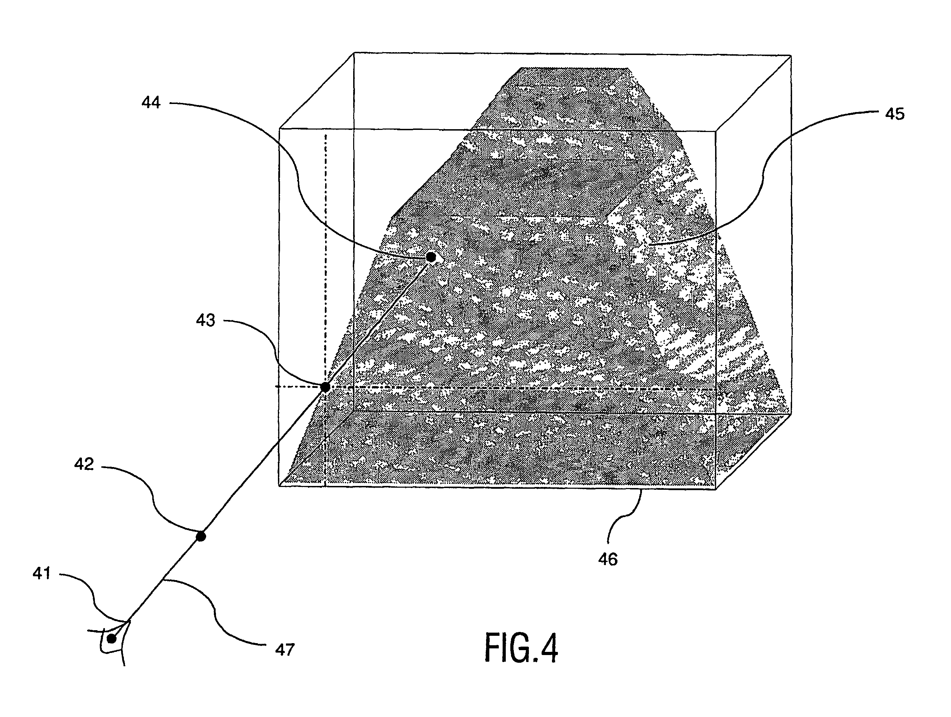

La figure 4 illustre une technique permettant la sélection d'une face d'une boîte parallélépipédique contenant un objet en 3D. L'exemple illustré s'applique à une boîte parallélépipédique 46 contenant un objet 45.

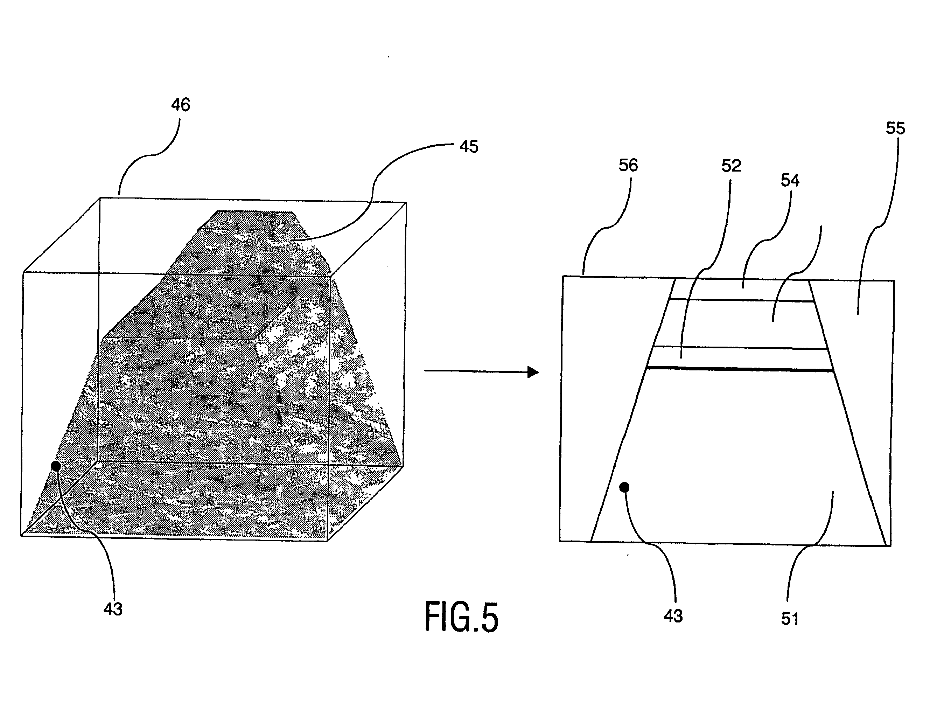

Lorsque l'utilisateur désire sélectionner une des faces de l'objet 45, la première étape consiste en la sélection d'une face de la boîte parallélépipédique 46. L'utilisateur clique sur un point de l'écran 42 de l'écran d'ordinateur 13, c'est à dire que lorsque le curseur 19 se trouve sur ce point de l'écran 42, l'utilisateur appuie sur un des boutons de sa souris 12. Un rayon imaginaire 47 est alors calculé, qui relie un point de vue 41, également imaginaire, et le point de l'écran 42. Le point de vue est un point se situant en dehors de l'écran d'ordinateur 13, qui est fixe, et qui peut correspondre, par exemple, au milieu du visage d'un utilisateur situé devant l'écran d'ordinateur 13. Le point d'intersection de ce rayon imaginaire 47 avec la première boîte parallélépipédique rencontrée contenant un objet en 3D est ensuite calculé. Dans cet exemple, la première boîte parallélépipédique rencontrée est la boîte parallélépipédique 46 contenant l'objet 45. Un point d'intersection 43 est alors obtenu. Il faut noter qu'en général, le rayon imaginaire possèdera deux points d'intersection avec une boîte parallélépipédique contenant un objet en 3D. Le point d'intersection retenu sera celui se situant le plus près de l'écran d'ordinateur 13. La face sélectionnée de la boîte parallélépipédique 46 est alors la face contenant le point d'intersection 43. Le point d'intersection de la face sélectionnée de l'objet 45 avec le rayon imaginaire 47 est un point sélectionné 44. La détermination de la face sélectionnée de l'objet 45 sera précisée plus en détail sur la figure 5.

La figure 5 illustre une technique permettant la sélection d'une face d'un objet en 3D. L'exemple illustré ici s'applique à la sélection d'une face de l'objet 45, connaissant la face sélectionnée de la boîte parallélépipédique 46 et le point d'intersection 43.

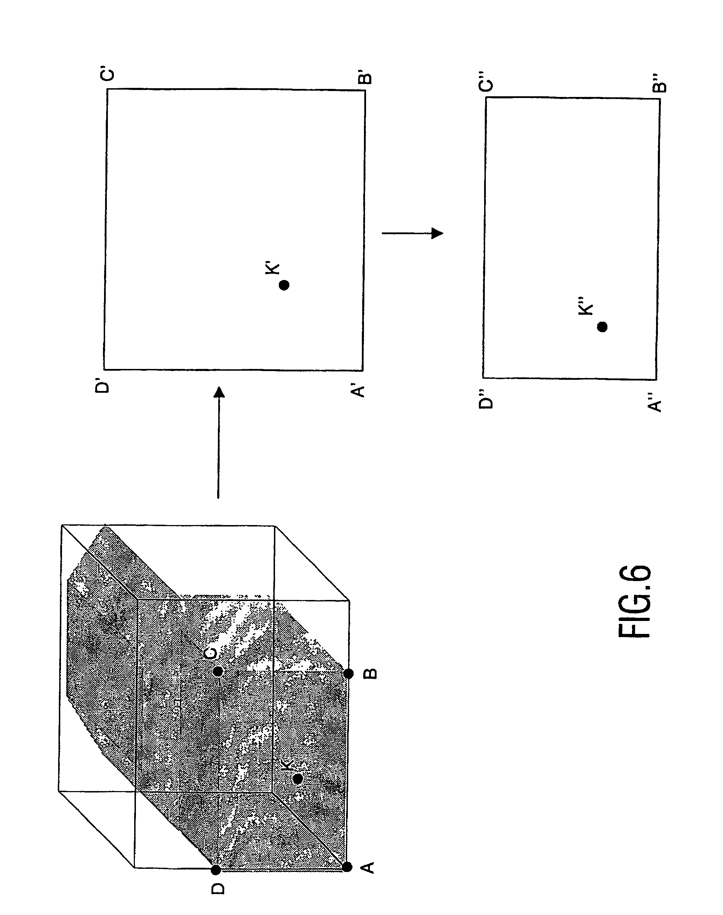

Le principe suivant permet la sélection d'une face de l'objet 45. L'objet 45 est projeté sur la face sélectionnée de la boîte parallélépipédique 46 pour obtenir une projection 56. Cette projection contient cinq secteurs numérotés de 51 à 55 correspondant à des faces ou des parties de faces de l'objet 45. On retient le secteur contenant le point d'intersection 43, c'est-à-dire le secteur 51 dans l'exemple illustré ici. La face sélectionnée de l'objet 45 est alors la face à laquelle correspond le secteur 51 dans la projection 56. Les techniques illustrées par les figures 4 et 5 permettent donc de connaître, à partir du point de l'écran 42 de l'écran d'ordinateur 13 sélectionné par l'utilisateur, les coordonnées 3D de la face de l'objet que cet utilisateur désirait sélectionner. D'autre part, ces techniques permettent de connaître les coordonnées 3D du point sélectionné 44, point d'intersection entre le rayon imaginaire et la face de l'objet que l'utilisateur désirait sélectionner. Dans le cas du puzzle par exemple, le point sélectionné 44 peut correspondre à la localisation d'une des pièces du puzzle et la face de l'objet sélectionnée au plan de jeu. Lorsque l'utilisateur désire déplacer la pièce se trouvant sur le point sélectionné 44, pour la placer à un autre endroit de la face sélectionnée, il clique sur le point sélectionné 44 grâce à sa souris 12 et maintient le clic, tout en déplaçant la souris. Pour que cette action soit possible, il faut savoir comment la pièce se déplace dans le plan de jeu, c'est-à-dire dans un environnement en 2D, lorsque l'utilisateur la déplace dans l'environnement en 3D. Il faut donc effectuer une conversion de coordonnées, pour connaître, par exemple, les coordonnées du point sélectionné 44 dans le plan de jeu. Cette conversion de coordonnées sera précisée en détail par la figure 6.

La figure 6 illustre un exemple de conversion de coordonnées 3D en coordonnées 2D. L'exemple s'applique à un premier point K, appartenant à une face possédant 4 sommets A, B, C et D (face ABCD) d'un objet en 3D. Dans l'exemple considéré ici, la face ABCD possède une forme rectangulaire, mais la méthode illustrée ci-dessous s'applique de la même façon, par exemple, au point sélectionné 44 de la face sélectionnée de l'objet 45 de forme arbitraire. Le but de la méthode illustrée ici consiste à convertir les coordonnées en 3D du premier point K en coordonnées en 2D d'un troisième point K" dans un plan A"B"C"D" correspondant par exemple au plan de jeu dans le cas d'un puzzle ou à la fenêtre de diffusion dans le cas d'une vidéo.

La première étape consiste à convertir les coordonnées en 3D du premier point K en coordonnées en 2D d'un deuxième point K' dans un référentiel A'B'C'D', qui est un référentiel carré d'arête 1, c'est-à-dire que A' a pour coordonnées (0,0), B' (1,0), C' (1,1) et D' (0,1). Pour cela, on calcule les poids $\alpha$, $\beta$, $\gamma$ et $\delta$ avec lesquels K serait le barycentre de A, B, C, et D, grâce à la relation vectorielle valable pour tout point M de la face ABCD, où $\underline{MA}$ désigne le «vecteur MA» et où la somme $(\alpha+\beta+\gamma+\delta)$ est différente de zéro :

$$\alpha\underline{MA}+\beta\underline{MB}+\gamma\underline{MC}+\delta\underline{MD}=(\alpha+\beta+\gamma+\delta)\underline{MK}$$

La résolution de cette équation s'effectue, d'une part, en projetant cette relation vectorielle sur un vecteur quelconque, dès lors que ce vecteur n'est ni orthogonal au plan ABCD, ni inclus dans ce plan ABCD, ce qui permet d'obtenir 3 équations algébriques ; d'autre part, en choisissant comme point particulier M le point O ayant pour coordonnées en 3D (0, 0, 0), ce qui entraîne $\alpha+\beta+\gamma+\delta=1$, on obtient une quatrième relation algébrique. Le calcul des poids $\alpha$, $\beta$, $\gamma$ et $\delta$ s'effectue alors en résolvant le système de 4 équations à 4 inconnues. Le point K' est le barycentre des points A', B', C' et D' affectés des coefficients $\alpha$, $\beta$, $\gamma$ et $\delta$. On détermine ensuite l'homothétie qui permet d'obtenir le plan A"B"C"D" à partir du référentiel A'B'C'D', et on applique cette homothétie au point K' afin d'obtenir les coordonnées 2D du point K". Ainsi, dès lors que l'on connaît le point et la face de l'objet 3D que l'utilisateur désirait sélectionner, on peut connaître le point correspondant à ce point sélectionné dans un plan correspondant, par exemple, au plan de jeu dans le cas d'un puzzle ou à la fenêtre de diffusion dans le cas d'une vidéo. Ainsi, l'utilisateur pourra déplacer le point sélectionné sur la face sélectionnée, grâce à sa souris 12 ou un autre appareil de commande. Il faut noter que cette action sera possible même si les objets en 3D sont en mouvement, les techniques décrites sur les figures 4 à 6 restant dans ce cas les mêmes.

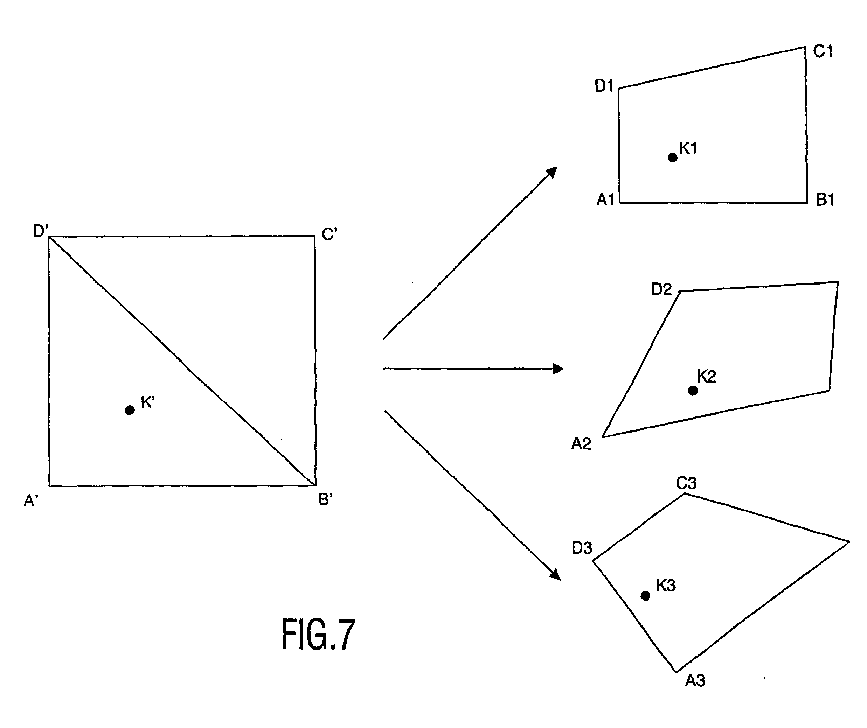

La figure 7 illustre des exemples de transformation de la forme d'une image avant son application sur une face d'un objet en 3D. Certains langages logiciels, par exemple VRML, permettent de déformer la forme de l'image que l'on veut appliquer sur une face d'un objet 3D. Par exemple, dans le cas du puzzle, on pourra déformer le plan de jeu ou dans le cas d'une vidéo on pourra déformer la fenêtre de visualisation. Ceci s'effectue en déformant le référentiel A'B'C'D'. La figure 7 illustre trois exemples de transformations du référentiel A'B'C'D', une première conduisant à un premier référentiel transformé A1B1C1D1, une deuxième conduisant à un deuxième référentiel transformé A2B2C2D2, une troisième conduisant à un troisième référentiel transformé A3B3C3D3. Lorsque le point K' a été déterminé, une étape supplémentaire est nécessaire avant le calcul des coordonnées du point K". Dans le cas de la première transformation, on calcule les coordonnées d'un premier point transformé K1, avant d'appliquer à ce point l'homothétie qui permet d'obtenir le plan A"B"C"D" à partir du référentiel A'B'C'D', afin d'obtenir les coordonnées du point K". Le calcul des coordonnées du point K1 s'effectue de la manière suivante ; on appelle xM l'abscisse d'un point M et yM l'ordonnée de ce point M. Si le point K' se situe dans un triangle formé par les points A', B' et D', comme c'est le cas dans l'exemple illustré ici, on applique les formules suivantes :

- $$xK1 = xK'*(xB1-xA1) + (1-yK')*xA1 + yK'*xD1$$

- $$yK1 = yK'*(yD1-yA1) + (1-xK')*yA1 + xK'*yB1$$

Si le point K' se situe dans un triangle formé par les points B', C' et D', on applique les formules suivantes :

- $$xK1 = 1 - ((1-xK')*(xC1-xD1) + yK'*(1-xC1) + (1-yK')*(1-xB1))$$

- $$yK1 = 1 - ((1-yK')*(xC1-xB1) + xK'*(1-yC1) + (1-xK')*(1-yD1))$$

Le calcul des coordonnées d'un deuxième point transformé K2 dans le cas de la deuxième transformation et des coordonnées d'un troisième point transformé K3 dans le cas de la troisième transformation s'effectuent de la même manière que le calcul des coordonnées du point transformé K1.

La description ci-dessus en référence aux figures illustre l'invention plutôt qu'elle ne la limite. A cet égard, quelques remarques sont faites ci-dessous.

Les figures 2 à 7 s'appuient sur l'exemple du langage VRML. L'invention s'applique également aux autres langages de description d'environnement en 3D, dès lors que ces langages permettent d'appliquer sur des faces d'objets en 3D des images fixes ou des vidéos en 2D.

L'exemple du puzzle employé dans la description des figures est une application possible de l'invention. Il est évident que l'invention ne se limite pas à cet exemple, mais qu'elle s'applique à toutes les formes de 'mapping' d'éléments en 2D sur des éléments en 3D.

En principe, il est possible d'implémenter le procédé selon l'invention au moyen d'un dispositif de traitement de données, par exemple un circuit d'ordinateur, convenablement programmé. Un jeu d'instructions contenu dans une mémoire de programmation peut entraîner le circuit d'ordinateur à effectuer les différentes opérations décrites précédemment. Le jeu d'instructions peut être chargé dans la mémoire de programmation par la lecture d'un support de données comme, par exemple, un disque qui contient le jeu d'instructions. La lecture peut s'effectuer par l'intermédiaire d'un réseau de communication comme, par exemple, l'Internet. Dans cas, un fournisseur de service (en anglais: service provider) mettra le jeu d'instructions à la disposition des intéressés.

**Revendications**

1. Procédé de traitement d'images dans des images comprenant des objets en trois dimensions, ledit procédé comportant une étape d'application d'une image en deux dimensions sur une face d'un objet en trois dimensions, **caractérisé en ce qu'**il comprend une étape d'interaction entre un utilisateur et l'image en deux dimensions appliquée sur l'objet en trois dimensions, ladite étape d'interaction étant destinée à permettre à l'utilisateur de déplacer tout ou partie de l'image en deux dimensions sur la face de l'objet en trois dimensions.

2. Procédé de traitement d'images selon la revendication 1, **caractérisé en ce que** ladite étape d'interaction comprend les sous-étapes de :

   - détermination du plus petit parallélépipède rectangle contenant l'objet en trois dimensions,
   - détermination de la face dudit parallélépipède sélectionnée par l'utilisateur,
   - détermination de la face et du point de l'objet en trois dimensions sélectionnés par l'utilisateur à partir de la face du parallélépipède sélectionnée,
   - conversion des coordonnées en trois dimensions du point sélectionné de l'objet en trois dimensions en coordonnées en deux dimensions,
   - déplacement du point sélectionné de l'objet en trois dimensions dans un plan en deux dimensions.

3. Procédé de traitement d'images selon la revendication 2, **caractérisé en ce que** la sous-étape de conversion des coordonnées en trois dimensions du point sélectionné de l'objet en trois dimensions en coordonnées en deux dimensions est destinée à déterminer les coordonnées en deux dimensions à partir du calcul des poids avec lesquels le point sélectionné de l'objet en trois dimensions est le barycentre des sommets de la face sélectionnée de l'objet en trois dimensions, en appliquant les poids ainsi calculés aux sommets de l'image en deux dimensions.

4. Procédé de traitement d'images selon la revendication 2, **caractérisé en ce que** ladite sous-étape de détermination de la face dudit parallélépipède sélectionnée par l'utilisateur est destinée à déterminer cette face à partir d'un rayon imaginaire tracé entre un point de vue donné et un endroit sélectionné par l'utilisateur sur un écran permettant l'affichage des images comprenant les objets en trois dimensions.

5. Procédé de traitement d'images selon la revendication 4, **caractérisé en ce que** ladite sous-étape de détermination de la face et du point de l'objet en trois dimensions sélectionnés par l'utilisateur est destinée à effectuer une projection des faces de l'objet en trois dimensions sur la face sélectionnée dudit parallélépipède, la face sélectionnée de l'objet en trois dimensions étant celle dont la projection contient le point d'intersection entre le rayon imaginaire et la face sélectionnée dudit parallélépipède, le point sélectionné de l'objet en trois dimensions étant le point d'intersection entre le rayon imaginaire et la face sélectionnée de l'objet en trois dimensions.

6. Procédé de traitement d'images selon la revendication 1, **caractérisée en ce que** ladite étape d'interaction s'effectue grâce à un curseur dont le déplacement est commandé par une souris, l'utilisateur cliquant sur l'image en deux dimensions à déplacer afin de la sélectionner et déplaçant le curseur afin de déplacer l'image sélectionnée.

7. Produit "programme d'ordinateur" pour un dispositif de traitement de données, le produit "programme d'ordinateur" comprenant un jeu d'instructions qui, quand il est chargé dans le dispositif de traitement de données, amène celui-ci à effectuer les étapes du procédé selon l'une des revendications 1 à 6.

**Patentansprüche**

1. Verfahren zur Bildverarbeitung in Bildern mit Objekten in drei Dimensionen, wobei das besagte Verfahren einen Schritt zum Aufbringen eines Bildes in zwei Dimensionen auf eine Objektfläche mit drei Dimensionen beinhaltet **dadurch gekennzeichnet, dass** es einen Interaktionsschritt zwischen einen Anwender und dem Bild in zwei Dimensionen, aufgebracht auf das Objekt in drei Dimensionen, enthält, wobei der besagte Interaktionsschritt dafür bestimmt ist, es dem Anwender zu ermöglichen, das ganze oder Teile des Bildes in zwei Dimensionen auf die Fläche des Objekts in drei Dimensionen zu versetzen.

2. Verfahren zur Bildverarbeitung nach Anspruch 1, **dadurch gekennzeichnet, dass** der besagte Interaktionsschritt folgende Unterschritte enthält:

   - Bestimmung des kleinsten rechteckigen Parallelepipeds, welches das Objekt in drei Dimensionen enthält,
   - Bestimmung der Fläche des besagten vom Anwender ausgewählten Parallelepipeds,
   - Bestimmung der Fläche und des Punkts des vom Anwender ausgewählten Objekts in drei Dimensionen ausgehend von der Fläche des ausgewählten Parallelepipeds,
   - Konversion der Koordinaten in drei Dimensionen des ausgewählten Punkts des Objekts in drei Dimensionen in Koordinaten in zwei Dimensionen,
   - Versetzung des ausgewählten Punkts des Objekts in drei Dimensionen auf eine Fläche in zwei Dimensionen.

3. Verfahren zur Bildverarbeitung nach Anspruch 2, **dadurch gekennzeichnet, dass** der Unterschritt zur Konversion der Koordinaten in drei Dimensionen des ausgewählten Punkts des Objekts in drei Dimensionen in Koordinaten in zwei Dimensionen zur Bestimmung der Koordinaten in zwei Dimensionen ausgehend von der Berechnungen der Stellenwerte bestimmt ist, mit denen der ausgewählte Punkt des Objekts in drei Dimensionen das Baryzentrum der Gipfel der ausgewählten Fläche des Objekts in drei Dimensionen unter Anwendung der somit führt die Gipfel des Bildes in zwei Dimensionen berechneten Stellenwerte bildet.

4. Verfahren zur Bildverarbeitung nach Anspruch 2, **dadurch gekennzeichnet, dass** der besagte Unterschritt zur Bestimmung der Fläche des besagten vom Anwender ausgewählten Parallelepipeds zur Bestimmung dieser Fläche anhand einer imaginären Verbindungslinie bestimmt ist, die zwischen einem bestimmten Ausgangspunkt und einer vom Anwender auf ein Bildschirm, der die Anzeige der Bilder mit den Objekten in drei Dimensionen ermöglicht, ausgewählten Stelle verläuft.

5. Verfahren zur Bildverarbeitung nach Anspruch 4, **dadurch gekennzeichnet, dass** der besagte Unterschritt zur Bestimmung der Fläche und des Punkts des vom Anwender ausgewählten Objekts in drei Dimensionen dazu bestimmt ist, eine Projektion der Flächen des Objekts in drei Dimensionen auf die ausgewählte Fläche des besagten Parallelepipeds auszuführen, wobei die ausgewählte Fläche des Objekts in drei Dimensionen diejenige ist, bei der die Projektion den Schnittstellenpunkt zwischen der imaginären Verbindungslinie und der ausgewählten Fläche des besagten Parallelepipeds enthält und der ausgewählt Punkt des Objekts in drei Dimensionen der Schnittstellenpunkt zwischen der imaginären Verbindungslinie und der ausgewählten Fläche des Objekts in drei Dimensionen ist.

6. Verfahren zur Bildverarbeitung nach Anspruch 1, **dadurch gekennzeichnet, dass** der besagte Interaktionsschritt unter Verwendung eines Cursors verläuft, dessen Versetzung von einer Maus gesteuert wird, wobei der Anwender auf das zu versetzende Bild in zwei Dimensionen klickt, um es auszuwählen und den Cursor zu versetzen, um so auch das ausgewählte Bild zu versetzen.

7. Produkt der Reihe "Computerprogramm" für ein Gerät zur Verarbeitung von Daten, wobei das Produkt "Computerprogramm" mit einen Anweisungssatz kommt, der, wenn er in das Datenverarbeitungsgerät geladen ist, dieses anweist, die Verfahrensschritte nach einem der Ansprüche 1 bis 6 auszuführen.

**Claims**

1. A method of processing images in images comprising objects in three dimensions, said method comprising a step of mapping a two-dimensional image on a face of a three-dimensional object, **characterized in that** the method comprises a step of interaction between a user and the two-dimensional image mapped on the three-dimensional object, said interaction step being intended to enable the user to displace the whole or a part of the two-dimensional image on the face of the three-dimensional object.

2. A method of processing images as claimed in claim 1, **characterized in that** said interaction step comprises the sub-steps of:

   determining the smallest parallelepiped rectangle comprising the three-dimensional object, determining the face of said parallelepiped selected by the user,
   determining the face and the point of the three-dimensional object, selected by the user from the selected face of the parallelepiped,
   converting co-ordinates in three dimensions of the selected point of the three-dimensional object into co-ordinates in two dimensions,
   displacing the selected point of the three-dimensional object in a two-dimensional plane.

3. A method of processing images as claimed in claim 2, **characterized in that** the sub-step of converting three-dimensional co-ordinates of the selected point of the three-dimensional object into two-dimensional co-ordinates is intended to determine the two-dimensional co-ordinates from the computation of the weights at which the selected point of the three-dimensional object is the barycenter of the apexes of the selected face of the three-dimensional object by applying the weights thus computed to the apexes of the two-dimensional image.

4. A method of processing images as claimed in claim 2, **characterized in that** said sub-step of determining the face of said parallelepiped selected by the user is intended to determine this face on the basis of an imaginary radius between a given viewing point and a user-selected spot on a screen, allowing the display of images comprising the three-dimensional objects.

5. A method of processing images as claimed in claim 4, **characterized in that** said sub-step of determining the face and the point of the three-dimensional object selected by the user is intended to project faces of the three-dimensional object on the selected face of said parallelepiped, the selected face of the three-dimensional object being that one whose projection comprises the point of intersection between the imaginary radius and the selected face of said parallelepiped, the selected point of the three-dimensional object being the point of intersection between the imaginary radius and the selected face of the three-dimensional object.

6. A method of processing images as claimed in claim 1, **characterized in that** said interaction step is effected by means of a cursor whose displacement is controlled by a mouse, the user clicking on the two-dimensional image to be displaced so as to select said image and displacing the cursor so as to displace the selected image.

7. A "computer program" product for a data-processing device, the "computer program" product comprising a set of instructions which, when loaded into the data-processing device, causes said device to perform the steps of the method as claimed in any one of claims 1 to 6.

FIG.1

EP 1 227 442 B1

FIG.2

FIG.3a

FIG.3b

FIG.3c

FIG.4

EP 1 227 442 B1

FIG.5

EP 1 227 442 B1

FIG.6

FIG.7